(19) Europäisches Patentamt
European Patent Office
Office européen des brevets

(11) EP 2 630 170 B1

(12) **EUROPEAN PATENT SPECIFICATION**

(45) Date of publication and mention of the grant of the patent:
**22.04.2015 Bulletin 2015/17**

(21) Application number: **11772942.6**

(22) Date of filing: **17.10.2011**

(51) Int Cl.:
***C08F 10/06*** (2006.01) ***C08F 4/651*** (2006.01)
***C08F 4/654*** (2006.01) ***C08F 4/649*** (2006.01)

(86) International application number:
**PCT/EP2011/068080**

(87) International publication number:
**WO 2012/052387 (26.04.2012 Gazette 2012/17)**

(54) **CATALYST SYSTEM FOR THE POLYMERIZATION OF OLEFINS**

KATALYSATORSYSTEM ZUR POLYMERISIERUNG VON OLEFINEN

SYSTÈME DE CATALYSEUR POUR LA POLYMÉRISATION D'OLÉFINES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.10.2010 US 405259 P**
**19.10.2010 EP 10188015**

(43) Date of publication of application:
**28.08.2013 Bulletin 2013/35**

(73) Proprietor: **Basell Poliolefine Italia S.r.l.**
**20127 Milano (IT)**

(72) Inventors:
- **MORINI, Giampiero**
  **I-44122 Ferrara (IT)**
- **GUIDOTTI, Simona**
  **I-40121 Bologna (IT)**
- **MIGNOGNA, Alessandro**
  **I-40121 Bologna (IT)**
- **PATER, Joachim T. M.**
  **I-44020 Ferrara (IT)**

(74) Representative: **Giberti, Stefano**
**c/o Basell Polioefine Italia s.r.l.**
**Intellectual property dept.**
**P.le Donegani 12**
**44122 Ferrara (IT)**

(56) References cited:
**WO-A1-2009/085649** **CN-A- 1 453 298**
**CN-A- 101 724 111** **US-A1- 2005 239 636**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 630 170 B1

## Description

The present invention relates to a catalyst system capable to produce propylene polymers with good activity, stereospecificity and increased hydrogen response.

Catalyst systems for the stereospecific polymerization of olefins are widely known in the art. The most common type of catalyst system belongs to the Ziegler-Natta family and comprises a solid catalyst component, constituted by a magnesium dihalide on which are supported a titanium compound and an internal electron donor compound, used in combination with an Al-alkyl compound. Conventionally however, when a higher crystallinity of the polymer is required, also an external donor, usually an alkylalkoxysilane, is needed in order to obtain higher isotacticity. In fact, when an external donor is absent, the isotactic index of the resulting polymer is not sufficiently high even if a 1,3-diether is used as internal donor.

In certain applications, particularly in the field of fibers manufacturing it is necessary to use polymers with relatively high fluidity i.e., with a relatively lower molecular weight and with a relatively narrow molecular weight distribution (MWD) in order to improve the spinnability. Propylene polymers combining high fluidity, narrow molecular weight distribution and high isotacticity are conventionally obtained by undergoing the chains of low fluidity isotactic propylene polymers to chemical visbreaking using peroxides as radical generators (rheology modifiers). From the operational point of view, however, this is not the preferred way because the stage of chemical visbreaking adds complexity to the entire process. It would therefore be highly advisable to have the said high fluidity polymers available as reactor grades.

Certain metallocene-based catalysts are able to provide propylene polymers with high fluidity and narrow MWD but the same polymers are also characterized by an insufficient cristallinity, as evidenced by the low melting point, due to the regio-errors induced by the said catalysts. Most of the catalysts belonging to the field of heterogeneous Ziegler-Natta catalysts are not able to provide high fluidity propylene polymers at standard chain transfer concentrations. Moreover, they generally provide propylene polymers with medium/broad MWD. An example of such catalysts is constituted by USP 7,388,061 which discloses diol esters belonging to the formula $R_1$-CO-O-$CR_3R_4$-A-$CR_5R_6$-O-CO-$R_2$ in which $R_1$ and $R_2$ groups, which may be identical or different, can be substituted or unsubstituted hydrocarbyl having 1 to 20 carbon atoms, $R_3$-$R_6$ groups, which may be identical or different, can be selected from the group consisting of hydrogen, halogen or substituted or unsubstituted hydrocarbyl having 1 to 20 carbon atoms, $R_1$-$R_6$ groups optionally contain one or more hetero-atoms replacing carbon, hydrogen atom or the both, said hetero-atom is selected from the group consisting of nitrogen, oxygen, sulfur, silicon, phosphorus and halogen atom, two or more of $R_3$-$R_6$ groups can be linked to form saturated or unsaturated monocyclic or polycyclic ring; A is a single bond or bivalent linking group with chain length between two free radicals being 1-10 atoms, wherein said bivalent linking group is selected from the group consisting of aliphatic, alicyclic and aromatic bivalent radicals, and can carry C1-C20 linear or branched substituents; one or more of carbon atoms and/or hydrogen atoms on above-mentioned bivalent linking group and substituents can be replaced by a hetero-atom selected from the group consisting of nitrogen, oxygen, sulfur, silicon, phosphorus, and halogen atom, and two or more said substituents on the linking group as well as above-mentioned $R_3$-$R_6$ groups can be linked to form saturated or unsaturated monocyclic or polycyclic ring.

The examples reported in the document show, in general, capability to produce polymers with a broad molecular weight distribution.

In the international patent application WO2009/085649 it is suggested that C4-C30 aliphatic acid esters may be used in combination with selectivity control agents in order to produce self-estinguishing catalyst compositions having reduced activity at temperature higher than 70°C. Esters of fatty acids like misopropyl myristate and di-n-butyl sebacate are generically mentioned but never tested.

When employing magnesium-chloride supported Ziegler-Natta catalysts high fluidity propylene polymers could be in general obtained by greatly increasing the concentration of the chain transfer agent (molecular weight regulator) in particular hydrogen which is commonly used industrially.

This involves increasing the pressure of the reaction system which in turn would make necessary the use of equipments especially designed to withstand to higher pressure which of course would turn into an increased complexity of the plant operation.

The problem becomes even more relevant, when also high cristallinity is required. In this situation, the catalyst system has to incorporate an external donor which is usually an alkylalkoxysilane which unfortunately increases the stereospecificity but also leads to a worsening of the hydrogen response, i.e., to the capability of producing increasingly short polymer chain in respect of incremental hydrogen concentration.

It is therefore felt the need of a catalyst system showing improved hydrogen response, capability of producing polymers with a lower molecular weight in the presence of small amounts of hydrogen.

The applicant has found that the selection of a specific type of catalyst system is able to solve the aforementioned problem. It is therefore an object of the present invention a catalyst system for olefin polymerization comprising the product obtained by contacting (a) a solid catalyst component containing Mg, Ti, halogen and at least an electron donor compound selected from diolesters of the following formula (A)

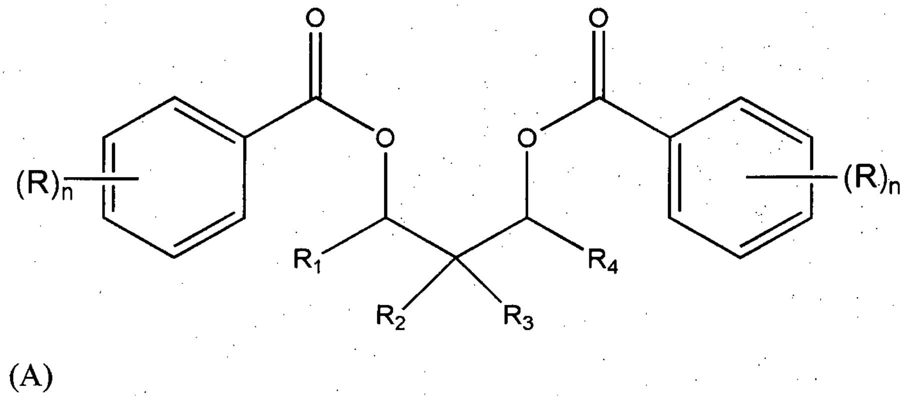

(A)

in which $R_1$-$R_4$ groups, equal to or different from each other, are hydrogen or $C_1$-$C_{15}$ hydrocarbon groups, optionally containing a heteroatom selected from halogen, P, S, N and Si, with the proviso that $R_1$ and $R_4$ are not simultaneously hydrogen, R groups equal to or different from each other, are selected from $C_1$-$C_{15}$ hydrocarbon groups which can be optionally linked to form a cycle and n is an integer from 0 to 5 ;

(b) an organo-aluminum compound as a co-catalyst; and
(c) an ester of formula $R'OOC-(CR''_2)_m-COOR'$ in which m is an integer from 2 to 7, the R' groups, equal to or different from each other, are $C_1$-$C_{10}$ alkyl groups and the R" groups, independently, are hydrogen or $C_1$-$C_{15}$ hydrocarbon groups.

Preferably, the solid catalyst component comprises Mg, Ti, halogen and a diolester of formula (A), in which $R_1$ and $R_4$ independently are selected from $C_1$-$C_{15}$ alkyl groups, $C_6$-$C_{14}$ aryl groups, $C_3$-$C_{15}$ cycloalkyl groups, and $C_7$-$C_{15}$ arylalkyl or alkylaryl groups. More preferably, $R_1$ and $R_4$ are selected from $C_1$-$C_{10}$ alkyl groups and even more preferably from $C_1$-$C_5$ alkyl groups in particular methyl.

Preferably, in the electron donor of formula (A) $R_2$-$R_3$ groups independently are selected from hydrogen, $C_1$-$C_{15}$ alkyl groups, $C_6$-$C_{14}$ aryl groups, $C_3$-$C_{15}$ cycloalkyl groups, and $C_7$-$C_{15}$ arylalkyl or alkylaryl groups. More preferably, $R_2$ and $R_3$ are selected from hydrogen or $C_1$-$C_{10}$ alkyl groups and even more preferably from hydrogen or $C_1$-$C_5$ alkyl groups in particular methyl. In one preferred embodiment, hydrogen and methyl are preferred. In one particular embodiment both $R_2$ and $R_3$ are hydrogen.

Preferably, in the electron donor of formula (A), R groups are selected from $C_1$-$C_{15}$ alkyl groups, $C_6$-$C_{14}$ aryl groups, $C_3$-$C_{15}$ cycloalkyl groups, and $C_7$-$C_{15}$ arylalkyl or alkylaryl groups. More preferably, R are selected from $C_1$-$C_{10}$ alkyl groups and even more preferably from $C_1$-$C_5$ alkyl groups. Among them particularly preferred are methyl, ethyl, n-propyl and n-butyl. The index n can vary from 0 to 5 inclusive, preferably it ranges from 1 to 3 and more preferably is 1. When n is 1, the substituent R is preferably in position 4 of the benzoate ring.

Moreover, in the electron donor of formula (A), preferred structures are those in which simultaneously $R_1$ and $R_4$ are methyl, $R_2$ and $R_3$ are hydrogen and n is 1 and the R groups, which are in position 4 of the benzene ring are methyl, ethyl, n-propyl or n-butyl.

Non limiting examples of structures (A) are the following: 2,4-pentanediol dibenzoate, 3-methyl-2,4-pentanediol dibenzoate, 3-ethyl-2,4-pentanediol dibenzoate, 3-n-propyl-2,4-pentanediol dibenzoate, 3-i-propyl-2,4-pentanediol dibenzoate, 3-n-butyl-2,4-pentanediol dibenzoate, 3-i-butyl-2,4-pentanediol dibenzoate, 3-t-butyl-2,4-pentanediol dibenzoate, 3-n-pentyl-2,4-pentanediol dibenzoate, 3-i-pentyl-2,4-pentanediol dibenzoate, 3-cyclopentyl-2,4-pentanediol dibenzoate, 3-cyclohexyl-2,4-pentanediol dibenzoate, 3-phenyl-2,4-pentanediol dibenzoate, 3-(2-naphtyl)-2,4-pentanediol dibenzoate, 3-allyl-2,4-pentanediol dibenzoate, 3,3-dimethyl-2,4-pentanediol dibenzoate, 3-ethyl-3-methyl-2,4-pentanediol dibenzoate, 3-methyl-3-i-propyl-2,4-pentanediol dibenzoate, 3,3-diisopropyl-2,4-pentanediol dibenzoate, 3-i-pentyl-2-i-propyl-2,4-pentanediol dibenzoate, 3,5-heptanediol dibenzoate, 4,6-nonanediol dibenzoate, 2,6-dimethyl-3,5-heptanediol dibenzoate, 5,7-undecanediol dibenzoate, 2,8-dimethyl-4,6-nonanediol dibenzoate, 2,2,6,6,tetramethyl-3,5-hetanediol dibenzoate, 6,8-tridecanediol dibenzoate, 2,10-dimethyl-5,7-undecanediol dibenzoate, 1,3-dicyclopentyl-1,3-propanediol dibenzoate, 1,3-dicyclohexyl-1,3-propanediol dibenzoate, 1,3-diphenyl-1,3-propanediol dibenzoate, 1,3-bis(2-naphtyl)-1,3-propanediol dibenzoate, 2,4-hexanediol dibenzoate, 2,4-heptanediol dibenzoate, 2-methyl-3,5-hexanediol dibenzoate, 2,4-octanediol dibenzoate, 2-methyl-4,6-heptanediol dibenzoate, 2,2-dimethyl-3,5-hexanediol dibenzoate, 2-methyl-5,7-octanediol dibenzoate, 2,4-nonanediol dibenzoate, 1-cyclopentyl-1,3-butanediol dibenzoate, 1-cyclohexyl-1,3-butanediol dibenzoate, 1-phenyl-1,3-butanediol dibenzoate, 1-(2-naphtyl)-1,3-butanediol dibenzoate, 2,4-pentanediol-bis(4-methylbenzoate), 2,4-pentanediol-bis(3-methylbenzoate), 2,4-pentanediol-bis(4-ethylbenzoate), 2,4-pentanediol-bis(4-n-propylbenzoate), 2,4-pentanediol-bis(4-n-butylbenzoate), 2,4-pentanediol-bis(4-i-propylbenzoate), 2,4-pentanediol-bis(4-i-butylbenzoate), 2,4-pentanediol-bis(4-t-butylbenzoate), 2,4-pentanediol-bis(4-phenylbenzoate), 2,4-pentanediol-bis(3,4-dimethylbenzoate), 2,4-pentanediol-bis(2,4,6-trimethylbenzoate), 2,4-pentanediol-bis(2,6-dimethylbenzoate), 2,4-pentanediol-di-(2-naphthoate), 3-methyl-2,4-pentanediol-bis(4-n-propylbenzoate), 3-i-pentyl-2,4-pentanediol-bis(4-n-propylbenzoate), 1,1, 1,5,5,5-hexafluoro-2,4-pentanediol-bis(4-ethylbenzoate), 1,1, 1-trifluoro-2,4-pentanediol-bis(4-ethylbenzoate), 1,3-bis(4-chlorophenyl)-1,3-propanediol-bis(4-ethylbenzoate), 1-(2,3,4,5,6-pentafluorophenyl)-1,3-butanediol-bis(4-ethylbenzoate), 1,1-difluoro-4-phenyl-2,4-butandiol-bis(4-n-propylbenzoate), 1,1,1-trifluoro-5,5-dimethyl-2,4-hexandiol-bis(4-n-propylbenzoate), 1,1,1-trifluoro-4-(2-furyl)-2,4-butandiol-bis(4-n-propylbenzoate), 1,1,1-trifluoro-4-phenyl-2,4-butandiol-bis(4-n-propylbenzoate), 1,1,1-trifluoro-4-(2-thienyl)-2,4-butandiol-bis(4-n-propylbenzoate), 1,1,1-trifluoro-4-(4-chloro-phenyl)-2,4-butandiol-bis(4-n-propylbenzoate), 1,1,1-trifluoro-4-(2-naphtyl)-2,4-butandiol-bis(4-n-propylbenzoate), 3-chloro-2,4-pentandiol-bis(4-n-propylbenzoate).

In addition to the diolesters above described the solid catalyst component (a) can also contain additional electron donors belonging to ethers, esters of aromatic or aliphatic mono or dicarboxylic acids, ketones, or alkoxyesters.

The additional donors may be present in an amount such that the diolester/other donor molar ratio ranges from 0.1 to 10 preferably from 0.2 to 8.

As explained above, the catalyst components of the invention comprise, in addition to the above electron donors, Ti, Mg and halogen. In particular, the catalyst components comprise a titanium compound, having at least a Ti-halogen bond and the above mentioned electron donor compounds supported on a Mg halide. The magnesium halide is preferably $MgCl_2$ in active form which is widely known from the patent literature as a support for Ziegler-Natta catalysts. Patents USP 4,298,718 and USP 4,495,338 were the first to describe the use of these compounds in Ziegler-Natta catalysis. It is known from these patents that the magnesium dihalides in active form used as support or co-support in components of catalysts for the polymerization of olefins are characterized by X-ray spectra in which the most intense diffraction line that appears in the spectrum of the non-active halide is diminished in intensity and is replaced by a halo whose maximum intensity is displaced towards lower angles relative to that of the more intense line. The preferred titanium compounds used in the catalyst component of the present invention are $TiCl_4$ and $TiCl_3$; furthermore, also Ti-haloalcoholates of formula $Ti(OR)_{n-y}X_y$ can be used, where n is the valence of titanium, y is a number between 1 and n-1, X is halogen and R is a hydrocarbon radical having from 1 to 10 carbon atoms.

The preparation of the solid catalyst component can be carried out according to several methods. According to one of these methods, the magnesium dichloride in an anhydrous state, the titanium compound and the electron donor compounds are milled together under conditions in which activation of the magnesium dichloride occurs. The so obtained product can be treated one or more times with an excess of $TiCl_4$ at a temperature between 80 and 135°C. This treatment is followed by washings with hydrocarbon solvents until chloride ions have disappeared. According to a further method, the product obtained by co-milling the magnesium chloride in an anhydrous state, the titanium compound and the electron donor compounds are treated with halogenated hydrocarbons such as 1,2-dichloroethane, chlorobenzene, dichloromethane etc. The treatment is carried out for a time between 1 and 4 hours and at temperature of from 40°C to the boiling point of the halogenated hydrocarbon. The product obtained is then generally washed with inert hydrocarbon solvents such as hexane.

According to another method, magnesium dichloride is preactivated according to well known methods and then treated with an excess of $TiCl_4$ at a temperature of about 80 to 135°C in the presence of the electron donor compounds. The treatment with $TiCl_4$ is repeated and the solid is washed with hexane in order to eliminate any non-reacted $TiCl_4$.

According to a preferred method, the solid catalyst component can be prepared by reacting a titanium compound of formula $Ti(OR)_{n-y}X_y$, where n is the valence of titanium and y is a number between 1 and n, preferably $TiCl_4$, with a magnesium chloride deriving from an adduct of formula $MgCl_2$.pROH, where p is a number between 0.1 and 6, preferably from 2 to 3.5, and R is a hydrocarbon radical having 1-18 carbon atoms. The adduct can be suitably prepared in spherical form by mixing alcohol and magnesium chloride in the presence of an inert hydrocarbon immiscible with the adduct, operating under stirring conditions at the melting temperature of the adduct (100-130C). Then, the emulsion is quickly quenched, thereby causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130°C) so as to obtain an adduct in which the number of moles of alcohol is generally lower than 3 preferably between 0.1 and 2.5. The reaction with the Ti compound can be carried out by suspending the adduct (dealcoholated or as such) in cold $TiCl_4$ (generally 0°C); the mixture is heated up to 80-130°C and kept at this temperature for 0.5-2 hours. The treatment with $TiCl_4$ can be carried out one or more times. The electron donor compounds can be added during the treatment with $TiCl_4$. They can be added together in the same treatment with $TiCl_4$ or separately in two or more treatments.

The preparation of catalyst components in spherical form are described for example in European Patent Applications EP-A-395083, EP-A-553805, EP-A-553806, EPA601525 and WO98/44001.

The solid catalyst components obtained according to the above method show a surface area (by B.E.T. method) generally between 20 and 500 $m^2/g$ and preferably between 50 and 400 $m^2/g$, and a total porosity (by B.E.T. method) higher than 0.2 $cm^3/g$ preferably between 0.2 and 0.6 $cm^3/g$. The porosity (Hg method) due to pores with radius up to

10.000Å generally ranges from 0.3 to 1.5 $cm^3/g$, preferably from 0.45 to 1 $cm^3/g$.

The solid catalyst component has an average particle size ranging from 5 to 120 μm and more preferably from 10 to 100 μm.

The organo-alkyl compound (b) is preferably an alkyl-Al compound which is preferably selected from the trialkyl aluminum compounds such as for example triethylaluminum, triisobutylaluminum, tri-n-butylaluminum, tri-n-hexylaluminum, tri-n-octylaluminum. It is also possible to use mixtures of trialkylaluminum's with alkylaluminum halides, alkylaluminum hydrides or alkylaluminum sesquichlorides such as $AlEt_2Cl$ and $Al_2Et_3Cl_3$.

The ester (c) is used as external electron donor and is preferably selected from the compounds in which R' is a C1-C6 linear or branched alkyl, preferably ethyl or isobutyl.

In the esters (c) m is preferably from 2 to 6 and especially from 2 to 5. The groups R", independently, are preferably selected from hydrogen or C1-C10 linear or branched alkyl groups. Still more preferably they are hydrogen.

Non limitative examples of esters (c) are diethyl succinate, diethyl glutarate, diethyl adipate, diethyl suberate, diethyl pimelate and the corresponding esters deriving from substitution of ethyl with methyl, isobutyl, 2-ethylhexyl. Diethyl pimelate and diethyl adipate are the most preferred.

The catalyst of the invention is able to polymerize any kind of $CH_2$=CHR olefins in which R is hydrogen or a C1-C10 hydrocarbon group or mixtures of such olefins. However, as mentioned above, it is particularly suited for the preparation of propylene polymers due to the fact that it shows increased hydrogen response with respect to the most common used alkylalkoxysilane, while maintaining high stereospecificity expressed by a percentage of xylene insolubility at 25°C generally of 97% or higher. The Molecular Weight Distribution (expressed as polydispersity index determined as described hereinafter) is narrow, generally lower than 4 and preferably lower than or equal to 3.8. Another important advantage is that hydrogen response and high stereospecificity are retained while maintaining a very good level of polymerization activity. Any kind of polymerization process can be used with the catalysts of the invention that are very versatile. The polymerization can be carried out for example in slurry using as diluent a liquid inert hydrocarbon, or in bulk using the liquid monomer (propylene) as a reaction medium, or in solution using either monomers or inert hydrocarbons as solvent for the nascent polymer. Moreover, it is possible to carry out the polymerization process in gas-phase operating in one or more fluidized or mechanically agitated bed reactors. Also, it can be carried out in a gas-phase reactor comprising two interconnected polymerization zones one of which, working under fast fluidization conditions and the other in which the polymer flows under the action of gravity.

The process of the present invention is particularly advantageous for producing said isotactic propylene polymers with high fluidity in liquid phase because in such a type of process the pressure problems connected to the use of increased amounts of hydrogen is more evident. As mentioned, the liquid phase process can be either in slurry, solution or bulk (liquid monomer). This latter technology is the most preferred and can be carried out in various types of reactors such as continuous stirred tank reactors, loop reactors or plug-flow ones. The polymerization is generally carried out at temperature of from 20 to 120°C, preferably of from 40 to 85°C. When the polymerization is carried out in gas-phase the operating pressure is generally between 0.5 and 10 MPa, preferably between 1 and 5 MPa. In the bulk polymerization the operating pressure is generally between 1 and 6 MPa preferably between 1.5 and 4 MPa. The catalyst of the present invention can be used as such in the polymerization process by introducing it directly into the reactor. In the alternative, the catalyst can be pre-polymerized before being introduced into the first polymerization reactor. The term pre-polymerized, as used in the art, means a catalyst which has been subject to a polymerization step at a low conversion degree. According to the present invention a catalyst is considered to be pre-polymerized when the amount the polymer produced is from about 0.1 up to about 1000 g per gram of solid catalyst component.

The pre-polymerization can be carried out with the α-olefins selected from the same group of olefins disclosed before. In particular, it is especially preferred pre-polymerizing ethylene or mixtures thereof with one or more α-olefins in an amount up to 20% by mole. Preferably, the conversion of the pre-polymerized catalyst component is from about 0.2 g up to about 500 g per gram of solid catalyst component.

The pre-polymerization step can be carried out at temperatures from 0 to 80°C preferably from 5 to 50°C in liquid or gas-phase. The pre-polymerization step can be performed in-line as a part of a continuous polymerization process or separately in a batch process. When batch pre-polymerization is performed, it is preferred to prepolymerize the catalyst of the invention with ethylene in order to produce an amount of polymer ranging from 0.5 to 20 g per gram of catalyst component.

As explained, the catalyst system is particularly suitable for the preparation of high fluidity polymers, such as polymers having a melt flow rate of higher than 50, preferably higher than 100 and more preferably higher than 250 g/10'. Such high fluidity polymers, also characterized by narrow molecular weight distribution are particularly suitable for fibers preparation.

The following examples are given in order to better illustrate the invention without limiting it.

## CHARACTERIZATION

### Determination of X.I.

2.5 g of polymer and 250 ml of o-xylene were placed in a round-bottomed flask provided with a cooler and a reflux condenser and kept under nitrogen. The obtained mixture was heated to 135°C and was kept under stirring for about 60 minutes. The final solution was allowed to cool to 25°C under continuous stirring, and the insoluble polymer was then filtered. The filtrate was then evaporated in a nitrogen flow at 140°C to reach a constant weight. The content of said xylene-soluble fraction is expressed as a percentage of the original 2.5 grams and then, by difference, the X.I. %.

### Melt flow rate (MFR)

Determined according to ISO 1133 (230°C, 2.16 Kg)

### Polydispersity Index (P.I.)

Determined at a temperature of 200 °C by using a parallel plates rheometer model RMS-800 marketed by RHEOMETRICS (USA), operating at an oscillation frequency which increases from 0.1 rad/sec to 100 rad/sec. The value of the polydispersity index is derived from the crossover modulus by way of the equation:

$$P.I. = 10^5/Gc$$

in which Gc is the crossover modulus defined as the value (expressed in Pa) at which G'=G" wherein G' is the storage modulus and G" is the loss modulus.

## EXAMPLES

### General procedure for preparation of the spherical adduct

An initial amount of microspheroidal $MgCl_2{\cdot}2.8C_2H_5OH$ was prepared according to the method described in ex.2 of WO98/44009 but operating on larger scale. The solid adduct so obtained was then subject to thermal dealcoholation at increasing temperatures from 30 to 130°C and operating in nitrogen current until reaching an alcohol content of 2.1 moles per mol of $MgCl_2$.

### General procedure A for the preparation of the solid catalyst component

Into a 500 ml round bottom flask, equipped with mechanical stirrer, cooler and thermometer 250 ml of $TiCl_4$ were introduced at room temperature under nitrogen atmosphere. After cooling to 0°C, while stirring, the internal donor 2,4-pentanediol-bis(4-n-propylbenzoate) and 10.0 g of microspheroidal $MgCl_2{\cdot}2.1C_2H_5OH$ (prepared as described above) were sequentially added into the flask. The amount of 2,4-pentanediol-bis(4-n-propylbenzoate) was specifically charged in order to have a Mg/donor molar ratio of 9.6.

The temperature was raised to 120°C and maintained for 2 hours. Thereafter, stirring was stopped, the solid product was allowed to settle and the supernatant liquid was siphoned off maintaining the temperature at 120°C. After the supernatant was removed, additional fresh $TiCl_4$ was added to reach the initial liquid volume again. The mixture was heated to 120°C again and kept at this temperature for 1 hour. Stirring was stopped again, the solid was allowed to settle and the supernatant liquid was siphoned off. The titanation step was repeated 1 more time at 120°C for 1 hour.

After siphoning off the liquid phase of the third titanation, the solid was washed with anhydrous hexane six times (6 x 100 ml) in temperature gradient down to 60°C and one time (100 ml) at room temperature. The obtained solid was then dried under vacuum, analyzed and used in the polymerization of propylene. The solid contains 3.6%wt of Ti and 9.4%wt of ID.

### Examples 1-10 and comparative examples 11-14

A 4-litre steel autoclave equipped with a stirrer, pressure gauge, thermometer, catalyst feeding system, monomer feeding lines and thermostating jacket, was purged with nitrogen flow at 70°C for one hour. Then, at 30°C under propylene flow, were charged in sequence with 75 ml of anhydrous hexane, 0.76 g of $AlEt_3$, the ester (c) reported in Table 1

($AlEt_3$/ester molar ratio of 20) and 10 mg of solid catalyst component reported in Table 1. The autoclave was closed; subsequently the amount of hydrogen reported in Table 1 was added. Then, under stirring, 1.2 Kg of liquid propylene was fed. The temperature was raised to 70°C in five minutes and the polymerization was carried out at this temperature for two hours. At the end of the polymerization, the non-reacted propylene was removed; the polymer was recovered and dried at 70°C under vacuum for three hours. Then the polymer was weighed, analyzed and fractionated with o-xylene to determine the amount of the xylene insoluble (X.I.) fraction. Polymer analyses, as well as catalyst activity, are reported in Table 1.

**TABLE 1**

| Ex. | Ester | $H_2$ (NL) | Activity (Kg/g) | XI (%) | MIL g/10' | PI |
|---|---|---|---|---|---|---|
| 1 | DEP | 2 | 80.6 | 97.8 | 2.3 | 3.6. |
| 2 | " | 5 | 89.8 | 98.0 | 11 | 3.7 |
| 3 | " | 10 | 92.1 | 97.9 | 60.4 | 3.6 |
| 4 | " | 15 | 72.2 | 97.4 | 183 | - |
| 5 | " | 20 | 81.6 | 97.2 | 430 | - |
| 6 | DEA | 2 | 80.0 | 97.7 | 1.6 | 3.7 |
| 7 | " | 5 | 82.1 | 98.0 | 11.1 | 3.6 |
| 8 | " | 10 | 88.9 | 98.1 | 38.0 | 3.8 |
| 9 | " | 15 | 94.5 | 98.1 | 124 | - |
| 10 | " | 20 | 98.6 | 97.4 | 315 | - |
| Comp.11 | C | 2 | 100 | 98.2 | 1.1 | 4.1 |
| Comp.12 | " | 5 | 102 | 98.1 | 11.7 | 4.3 |
| Comp.13 | " | 10 | 115 | 97.3 | 37.6 | 4.3 |
| Comp.14 | " | 20 | 89 | 97.1 | 240 | |

DEA = Diethyl Adipate
DEP = Diethyl Pimelate
C = Cyclohexylmethyldimethoxy silane
n.d. = not determined

## Claims

1. A catalyst system for olefin polymerization comprising the product obtained by contacting (a) a solid catalyst component containing Mg, Ti, halogen and at least an electron donor compound selected from diesters of the following formula (A)

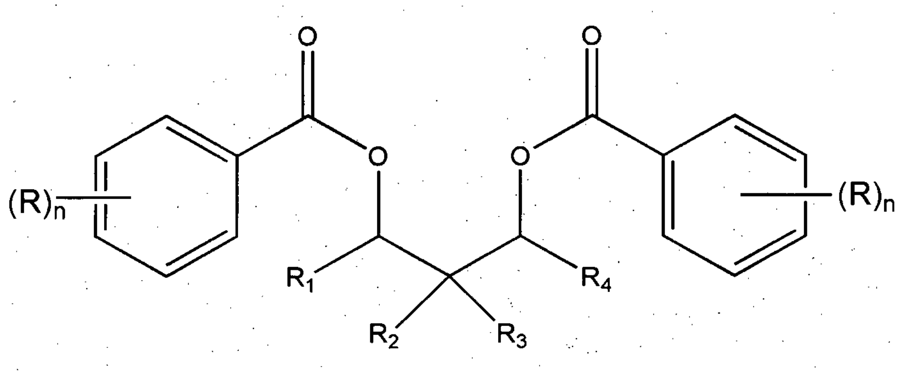

(A)

in which $R_1$-$R_4$ groups, equal to or different from each other, are hydrogen or $C_1$-$C_{15}$ hydrocarbon groups, optionally containing a heteroatom selected from halogen, P, S, N and Si, with the proviso that $R_1$ and $R_4$ are not simultaneously hydrogen, R groups equal to or different from each other, are selected from $C_1$-$C_{15}$ hydrocarbon groups which can be optionally linked to form a cycle and n is an integer from 0 to 5;

(b) an alkylaluminum cocatalyst and
(c) an ester formula R'OOC-$(CR''_2)_m$-COOR' in which m is an integer from 2 to 7, the R' groups, equal to or different from each other, are $C_1$-$C_{10}$ alkyl groups and the R" groups, independently, are hydrogen or $C_1$-$C_{15}$ hydrocarbon groups.

2. The catalyst system according to claim 1 in which in the donor of formula (A) $R_1$ and $R_4$ are independently selected from $C_1$-$C_{15}$ alkyl groups, $C_6$-$C_{14}$ aryl groups, $C_3$-$C_{15}$ cycloalkyl groups, and $C_7$-$C_{15}$ arylalkyl or alkylaryl groups.

3. The catalyst system according to claim 1 or 2 in which $R_1$ and $R_4$ are selected from $C_1$-$C_{10}$ alkyl groups.

4. The catalyst system according to anyone of the preceding claims in which $R_2$-$R_3$ groups independently are selected from hydrogen, $C_1$-$C_{15}$ alkyl groups, $C_6$-$C_{14}$ aryl groups, $C_3$-$C_{15}$ cycloalkyl groups, and $C_7$-$C_{15}$ arylalkyl or alkylaryl groups.

5. The catalyst system according to anyone of the preceding claims in which $R_2$-$R_3$ groups independently are selected from hydrogen or $C_1$-$C_{10}$ alkyl groups.

6. The catalyst system according to anyone of the preceding claims in which both $R_2$ and $R_3$ groups, independently, are hydrogen.

7. The catalyst system according to anyone of the preceding claims in which R groups are selected from $C_1$-$C_{15}$ alkyl groups, $C_6$-$C_{14}$ aryl groups, $C_3$-$C_{15}$ cycloalkyl groups, and $C_7$-$C_{15}$ arylalkyl or alkylaryl groups.

8. The catalyst system according to anyone of the preceding claims in which R groups are selected from $C_1$-$C_5$ alkyl groups.

9. The catalyst system according to anyone of the preceding claims in which the index n ranges from 1 to 3.

10. The catalyst system according to anyone of the preceding claims in which the organo aluminum compound is an alkyl-Al compound.

11. The catalyst system according to claim 10 in which alkyl-Al compound is an aluminum trialkyl.

12. The catalyst system according to anyone of the preceding claims in which the ester (c) is selected from the compounds in which R' is a $C_1$-$C_6$ linear or branched alkyl.

13. The catalyst system according to claim 12 in which in the ester (c) m is from 2 to 6, and the groups R", independently, are selected from hydrogen or C1-C10 linear or branched alkyl groups

14. Process for the (co)polymerization of olefins carried out in the presence of hydrogen and of a catalyst system according to claim 1.

15. The process according to claim 14 in which the olefin is propylene.

**Patentansprüche**

1. Katalysatorsystem zur Olefinpolymerisation, das das Produkt enthält, das durch Inkontaktbringen (a) einer festen Katalysatorkomponente, die Mg, Ti, Halogen und mindestens eine Elektronendonatorverbindung enthält, die aus Diolestern der folgenden Formel (A) ausgewählt ist:

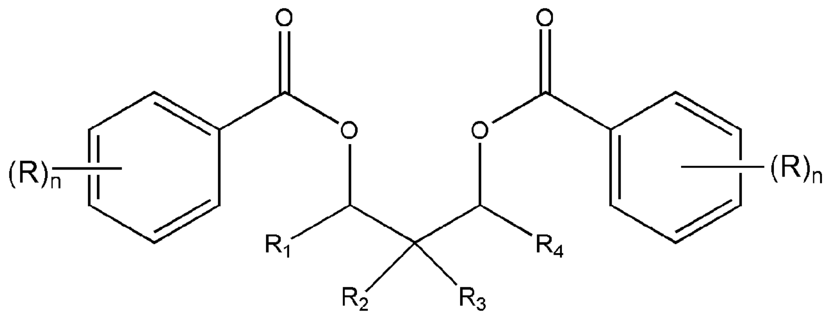

(A),

wobei $R_1$-$R_4$-Gruppen, die gleich oder voneinander verschieden sind, Wasserstoff oder $C_1$-$C_{15}$-Kohlenwasserstoffgruppen sind, die gegebenenfalls ein Heteroatom enthalten, das aus Halogen, P, S, N und Si ausgewählt ist, mit der Maßgabe, dass $R_1$ und $R_4$ nicht gleichzeitig Wasserstoff sind, R-Gruppen, die gleich oder voneinander verschieden sind, aus $C_1$-$C_{15}$-Kohlenwasserstoffgruppen ausgewählt sind, die gegebenenfalls verknüpft sein können, um einen Ring zu bilden, und n eine ganze Zahl von 0 bis 5 ist;

(b) eines Alkylaluminium-Kokatalysators und
(c) eines Esters der Formel R'OOC-$(CR''_2)_m$-COOR', wobei m eine ganze Zahl von 2 bis 7 ist, die R'-Gruppen, die gleich oder voneinander verschieden sind, $C_1$-$C_{10}$-Alkylgruppen sind und die R"-Gruppen unabhängig Wasserstoff oder $C_1$-$C_{15}$-Kohlenwasserstoffgruppen sind, erhalten wird.

**2.** Katalysatorsystem nach Anspruch 1, wobei $R_1$ und $R_4$ in dem Donator der Formel (A) unabhängig aus $C_1$-$C_{15}$-Alkylgruppen, $C_6$-$C_{14}$-Arylgruppen, $C_3$-$C_{15}$-Cycloalkylgruppen und $C_7$-$C_{15}$-Arylalkyl- oder -Alkylarylgruppen ausgewählt sind.

**3.** Katalysatorsystem nach Anspruch 1 oder 2, wobei $R_1$ und $R_4$ aus $C_1$-$C_{10}$-Alkylgruppen ausgewählt sind.

**4.** Katalysatorsystem nach einem der vorhergehenden Ansprüche, wobei $R_2$-$R_3$-Gruppen unabhängig aus Wasserstoff, $C_1$-$C_{15}$-Alkylgruppen, $C_6$-$C_{14}$-Arylgruppen, $C_3$-$C_{15}$-Cycloalkylgruppen und $C_7$-$C_{15}$-Arylalkyl- oder -Alkylarylgruppen ausgewählt sind.

**5.** Katalysatorsystem nach einem der vorhergehenden Ansprüche, wobei $R_2$-$R_3$-Gruppen unabhängig aus Wasserstoff oder $C_1$-$C_{10}$-Alkylgruppen ausgewählt sind.

**6.** Katalysatorsystem nach einem der vorhergehenden Ansprüche, wobei sowohl $R_2$- als auch $R_3$-Gruppen unabhängig Wasserstoff sind.

**7.** Katalysatorsystem nach einem der vorhergehenden Ansprüche, wobei R-Gruppen aus $C_1$-$C_{15}$-Alkylgruppen, $C_6$-$C_{14}$-Arylgruppen, $C_3$-$C_{15}$-Cycloalkylgruppen und $C_7$-$C_{15}$-Arylalkyl- oder -Alkylarylgruppen ausgewählt sind.

**8.** Katalysatorsystem nach einem der vorhergehenden Ansprüche, wobei R-Gruppen aus $C_1$-$C_5$-Alkylgruppen ausgewählt sind.

**9.** Katalysatorsystem nach einem der vorhergehenden Ansprüche, wobei der Index n von 1 bis 3 reicht.

**10.** Katalysatorsystem nach einem der vorhergehenden Ansprüche, wobei die Organoaluminiumverbindung eine Alkyl-Al-Verbindung ist.

**11.** Katalysatorsystem nach Anspruch 10, wobei die Alkyl-Al-Verbindung ein Aluminiumtrialkyl ist.

**12.** Katalysatorsystem nach einem der vorhergehenden Ansprüche, wobei der Ester (c) aus den Verbindungen ausgewählt ist, in denen R' ein lineares oder verzweigtes $C_1$-$C_6$-Alkyl ist.

**13.** Katalysatorsystem nach Anspruch 12, wobei in dem Ester (c) m von 2 bis 6 ist und die Gruppen R" unabhängig aus

Wasserstoff oder linearen oder verzweigten $C_1$-$C_{10}$-Alkylgruppen ausgewählt sind.

**14.** Verfahren zur (Co)polymerisation von Olefinen, das in Gegenwart von Wasserstoff und einem Katalysatorsystem nach Anspruch 1 durchgeführt wird.

**15.** Verfahren nach Anspruch 14, wobei das Olefin Propylen ist.

**Revendications**

**1.** Système catalytique pour la polymérisation d'oléfines, comprenant le produit obtenu par mise en contact de (a) un constituant catalytique solide contenant Mg, Ti, halogène et au moins un composé donneur d'électrons choisi parmi les esters de diol de la formule (A) suivante

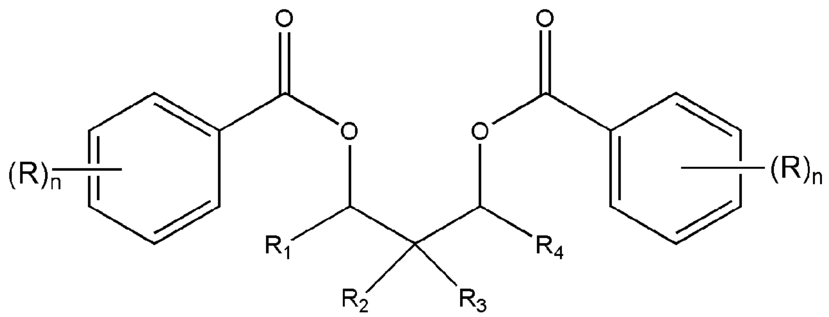

(A)

dans laquelle les groupes $R_1$-$R_4$, identiques ou différents les uns des autres, représentent hydrogène ou des groupes hydrocarbonés en $C_1$-$C_{15}$, contenant éventuellement un hétéroatome choisi parmi halogène, P, S, N et Si, à condition que $R_1$ et $R_4$ ne représentent pas simultanément hydrogène, les groupes R, identiques ou différents les uns des autres, sont choisis parmi les groupes hydrocarbonés en $C_1$-$C_{15}$ qui peuvent éventuellement être liés pour former un cycle et n représente un entier de 0 à 5 ;

(b) un cocatalyseur à base d'alkylaluminium et
(c) un ester de formule $R'OOC-(CR''_2)_m-COOR'$ dans laquelle m représente un entier de 2 à 7, les groupes R', identiques ou différents l'un de l'autre, représentent des groupes $C_1$-$C_{10}$-alkyle et les groupes R" représentent, indépendamment, hydrogène ou des groupes hydrocarbonés en $C_1$-$C_{15}$.

**2.** Système catalytique selon la revendication 1, dans lequel, dans le donneur de formule (A), $R_1$ et $R_4$ sont choisis, indépendamment, parmi les groupes $C_1$-$C_{15}$-alkyle, les groupes $C_6$-$C_{14}$-aryle, les groupes $C_3$-$C_{15}$-cycloalkyle et les groupes $C_7$-$C_{15}$-arylalkyle ou $C_7$-$C_{15}$-alkylaryle.

**3.** Système catalytique selon la revendication 1 ou 2, dans lequel $R_1$ et $R_4$ sont choisis parmi les groupes $C_1$-$C_{10}$-alkyle.

**4.** Système catalytique selon l'une quelconque des revendications précédentes, dans lequel les groupes $R_2$-$R_3$ sont choisis, indépendamment, parmi hydrogène, les groupes $C_1$-$C_{15}$-alkyle, les groupes $C_6$-$C_{14}$-aryle, les groupes $C_3$-$C_{15}$-cycloalkyle et les groupes $C_7$-$C_{15}$-arylalkyle ou $C_7$-$C_{15}$-alkylaryle.

**5.** Système catalytique selon l'une quelconque des revendications précédentes, dans lequel les groupes $R_2$-$R_3$ sont choisis, indépendamment, parmi hydrogène ou les groupes $C_1$-$C_{10}$-alkyle.

**6.** Système catalytique selon l'une quelconque des revendications précédentes, dans lequel tant les groupes $R_2$ que les groupes $R_3$ représentent, indépendamment, hydrogène.

**7.** Système catalytique selon l'une quelconque des revendications précédentes, dans lequel les groupes R sont choisis parmi les groupes $C_1$-$C_{15}$-alkyle, les groupes $C_6$-$C_{14}$-aryle, les groupes $C_3$-$C_{15}$-cycloalkyle et les groupes $C_7$-$C_{15}$-arylalkyle ou $C_7$-$C_{15}$-alkylaryle.

**8.** Système catalytique selon l'une quelconque des revendications précédentes, dans lequel les groupes R sont choisis parmi les groupes $C_1$-$C_5$-alkyle.

**9.** Système catalytique selon l'une quelconque des revendications précédentes, dans lequel l'indice n se situe dans la plage de 1 à 3.

**10.** Système catalytique selon l'une quelconque des revendications précédentes, dans lequel le composé organique d'aluminium est un composé d'alkyl-Al.

**11.** Système catalytique selon la revendication 10, dans lequel le composé d'alkyl-Al est un trialkylaluminium.

**12.** Système catalytique selon l'une quelconque des revendications précédentes, dans lequel l'ester (c) est choisi parmi les composés dans lesquels R' représente un $C_1$-$C_6$-alkyle linéaire ou ramifié.

**13.** Système catalytique selon la revendication 12, dans lequel, dans l'ester (c), m vaut de 2 à 6 et les groupes R" sont choisis, indépendamment, parmi hydrogène ou les groupes $C_1$-$C_{10}$-alkyle linéaires ou ramifiés.

**14.** Procédé pour la (co)polymérisation d'oléfines réalisé en présence d'hydrogène et d'un système catalytique selon la revendication 1.

**15.** Procédé selon la revendication 14, dans lequel l'oléfine est le propylène.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US P7388061 B
- WO 2009085649 A
- US P4298718 A
- US P4495338 A
- US P4399054 A
- US P4469648 A
- EP 395083 A
- EP 553805 A
- EP 553806 A
- EP 601525 A
- WO 9844001 A
- WO 9844009 A